# EUROPEAN PATENT APPLICATION

(11) **EP 3 067 307 A1**
(43) Date of publication of application: **14.09.2016**
(21) Application number: 14860889.6
(22) Date of filing: 06.11.2014
(51) Int. Cl.: B66B 11/08, F16C 33/80, F16N 31/00, H02K 5/10, H02K 7/102

(54) **ELEVATOR HOIST**

(30) Priority: 07.11.2013 JP 2013230801
(71) Applicant: Meidensha Corporation, Tokyo 141-6029 (JP)
(72) Inventor: KOROKI, Keiichi, Tokyo 141-6029 (JP); SUWAZONO, Sachiko, Tokyo 141-6029 (JP); OGASAWARA, Hitoshi, Tokyo 141-6029 (JP)
(74) Representative: Strehl Schübel-Hopf & Partner
(86) International application number: PCT/JP2014/079397
(87) International publication number: WO 2015/068750

(57) **Abstract**

To prevent oil from adhering to a brake disc when the oil leaks from a bearing unit. A first bearing unit (b1) of a motor (110) is disposed in a state of being inserted into a bearing unit insertion part (124) of a sheave (120), and is therefore positioned on the inner peripheral side of a rope winding part (122). The rope winding part (122) of the sheave (120) has a brake disk (D) formed integrally therewith on the motor side. In order to prevent oil from reaching the brake disk (D) when oil leaks out from the first bearing unit (b1), three systems of oil guide structures (210, 220, 230) for guiding leaked oil to a position set apart from the brake disk (D) are provided.

## Description

### Technical Field

The present invention relates to an elevator hoist contrived so as to prevent oil leaking out from a bearing unit from adhering to a brake disc.

### Background Art

An elevator hoist is configured of a motor and a sheave (rope wheel) as main members. In an elevator hoist of one type, the sheave is cantilever-supported by a shaft of the motor.

In a hoist of a cantilever-support type as described above, a contrivance has been made in which the dimension in an axial direction is decreased to reduce size and weight (for example, refer to PTL 1).

A general outline of a hoist of a cantilever-support type as disclosed in PTL 1 is described with reference to FIG. 3. This hoist 1 is configured of a motor 10 and a sheave 20 as main members.

A shaft S of the motor 10 is rotatably supported by a first bearing unit b1 provided to a first bracket B1 and a second bearing unit b2 provided to a second bracket B2. One end side (first bearing unit side) of the shaft S of the motor 10 protrudes outside the first bearing unit b1.

In the bearing units b1 and b2, lubricating oil is enclosed. By an oil seal (omitted in the drawing), oil leakage from the bearing units b1 and b2 is prevented.

The sheave 20 is attached to a portion of the shaft S protruding outside the motor 10. The sheave 20 has formed integrally therewith a boss unit 21 on an inner peripheral side where the shaft S of the motor 10 fits, a cylindrical rope winding part 22 concentrically disposed to the boss unit 21 on an outer peripheral side, and a spoke unit 23 coupling an outer peripheral surface of the boss unit 21 and an inner peripheral surface of the rope winding part 22 together to attach the rope winding part 22 to the boss unit 21.

When the sheave 20 is rotated by the motor 10, a rope is wound or rewound with respect to a rope winding surface 22a, which is an outer peripheral surface of the rope winding part 22.

Furthermore, in the sheave 20, a bearing unit insertion part 24 is formed on an inner peripheral side of the rope winding part 22. The bearing unit insertion part 24 has a cavity space extending from a motor side toward a sheave side in the axial direction, and the first bearing unit b1 is disposed in a state of being inserted into this bearing unit insertion part 24.

Therefore, the first bearing unit b1 is disposed at a position on the inner peripheral side of the rope winding part 22, thereby decreasing the dimension of the hoist 1 in the axial direction.

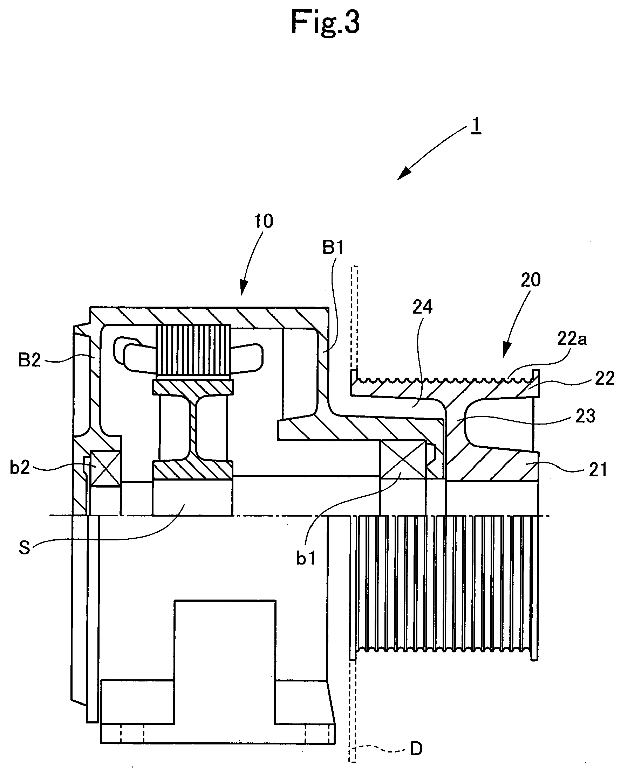

Note that although depiction is omitted in Figure 3, the hoist 1 also includes a brake device which restrains the rotation of the sheave 20.

With the aim of further reducing the size of the hoist, in recent years, it has also been studied that the sheave 20 and the brake disc of the brake device are integrated together.

That is, as indicated by dotted lines in FIG. 3, a brake disc D is integrally attached to a portion of the rope winding part 22 of the sheave 20 on a motor side.

Note that a brake main body unit including an electromagnetic clamper, a brake pad, and so forth is fixed and installed to the motor 10.

### Citation List

### Patent Literature

PTL 1: Japanese Patent Application Laid-Open No. 2010-37094
PTL 2: Japanese Patent Application Laid-Open No. 2009-280380
PTL 3: Japanese Patent Application Laid-Open No. 2005-162464
PTL 4: Japanese Patent Application Laid-Open No. 2008-162787

### Summary of Invention

### Technical Problem

Meanwhile, as indicated by the dotted lines in Figure 3, when the brake disc D is attached to the portion of the rope winding part 22 on the motor side, concerns about the occurrence of problems as follows may arise.

That is, when lubricating oil leaks out from the first bearing unit b1 due to deterioration with time, damages, or the like of the oil seal, there is a possibility that the leaked oil may move along a surface (surface on a motor side) of the boss unit 21, a surface (surface on a motor side) of the spoke unit 23, and the inner peripheral surface of the rope winding part 22 to reach the brake disc D. When thus leaked oil reaches the brake disc D and is adhered to the disc surface, a problem arises in which the brake becomes less prone to work.

In view of the above conventional technologies, an object of the present invention is to provide an elevator hoist having a brake disc integrally attached to a rope winding part of a sheave, in which even if lubricating oil leaks out from the bearing unit, this oil does not adhered to the brake disc.

### Solution to Problems

A structure of the present invention to solve the above problems is characterized in that, in an elevator hoist having a motor and a sheave to be rotated by the motor,
in the motor, one end side of a shaft rotatably supported by a first bearing unit and a second bearing unit protruding outside the first bearing unit,
the sheave having a boss unit which fits in a portion of the shaft protruding outside, a rope winding part concentrically disposed to the boss unit on an outer peripheral side, a coupling unit which couples the boss unit and the rope winding part together, a bearing unit insertion part which is a cavity space on an inner peripheral side of the rope winding part and extending from the motor side to the sheave side in an axial direction, and a brake disc integrally formed at a portion of the rope winding part on the motor side, and
the first bearing unit being disposed in a state of being inserted into the bearing unit insertion part, wherein
the elevator hoist includes a first oil guide structure formed of
an annular-plate-shaped first guide seal disposed so as to be in a concentric state with respect to the shaft and having a portion on an outer peripheral side fixed to a surface of a first bracket including the first bearing unit on the sheave side and a portion on an inner peripheral side forming, together with the first bearing unit, a gap serving as a first oil reservoir space therebetween, and
a first oil drainage hole which drains oil accumulated in the first oil reservoir space to an inner space side of the motor.

Also, the structure of the present invention is characterized in that
the first oil guide structure further includes
a flinger attached to the shaft at a position of the first guide seal on the inner peripheral side and in a state of facing the first oil reservoir space.

Furthermore, the structure of the present invention is characterized to further include
a second oil guide structure formed of
an annular-plate-shaped second guide seal disposed so as to be in a concentric state with respect to the shaft and having a portion on an outer peripheral side fixed to a surface of the coupling unit on the motor side and a portion on an inner peripheral side forming, together with the boss unit, a gap serving as a second oil reservoir space therebetween, and
a second oil drainage hole which drains oil accumulated in the second oil reservoir space to a surface of the coupling unit on a counter motor side.

Still further, the structure of the present invention is characterized to further include
a third oil guide structure including an oil guide surface in which a surface from a portion of an outer peripheral surface of a casing of the motor where the first bearing unit is provided to a lower end face of the casing forms a gently-descending slope.

Still further, the structure of the present invention is characterized to further include
a third oil guide structure in which a surface from a portion of an outer peripheral surface of a casing of the motor where the first bearing unit is provided to a lower end face of the casing forms an oil guide surface formed by connecting a vertical surface, a tilted surface tilted with respect to a vertical direction, and a curved surface together,
a third oil guide structure in which the surface from the portion of the outer peripheral surface of the casing of the motor where the first bearing unit is provided to the lower end face of the casing forms an oil guide surface formed by connecting the vertical surface and the tilted surface tilted with respect to the vertical direction together, or
a third oil guide structure in which the surface from the portion of the outer peripheral surface of the casing of the motor where the first bearing unit is provided to the lower end face of the casing forms an oil guide surface formed by connecting the vertical surface and the curved surface together.

### Advantageous Effects of Invention

According to the present invention, even if oil leaks out from the bearing unit on a sheave side, this oil flows as being guided by the oil guide structures without reaching the brake disc integrally formed with the rope winding part or adhering to the brake disc. With this, brakeage of the brake can be ensured, and reliability as an elevator hoist is improved.

### Brief Description of Drawings

Figure 1 is a structural diagram depicting an elevator hoist according to an embodiment of the present invention.
Figure 2 is a structural diagram depicting an oil guide structure included in the elevator hoist according to the embodiment of the present invention.
Figure 3 is a structural diagram depicting an elevator hoist according to a conventional technology.

### Description of Embodiments

An elevator hoist according to the present invention is described in detail below based on an embodiment.

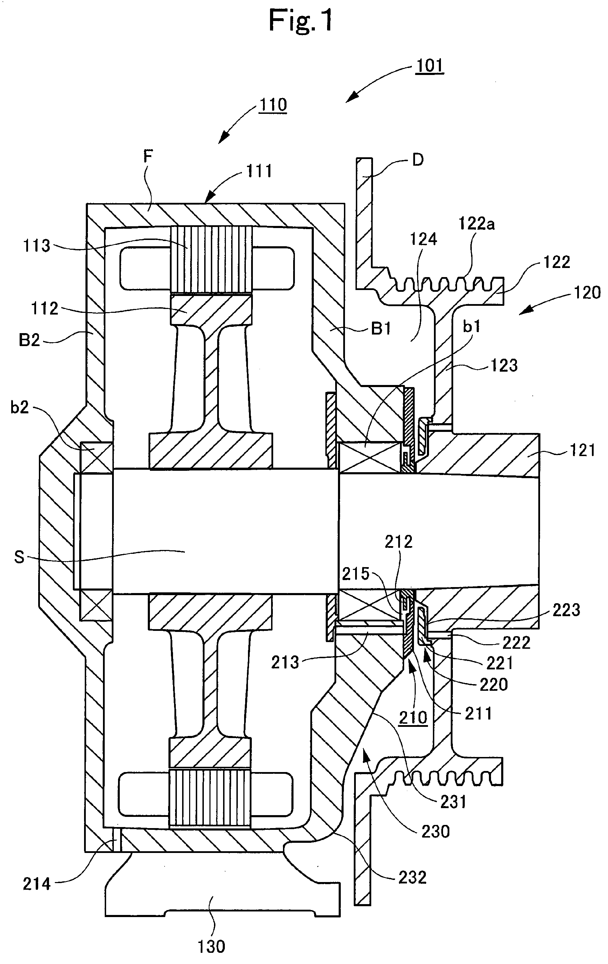

Figure 1 is a structural diagram depicting an elevator hoist 101 according to the embodiment of the present invention. This hoist 101 is configured of a motor 110, a sheave 120, and a base 130 as main members.

While details will be described further below, this hoist 101 includes first to third oil guide structures which, even if oil leaks out from a bearing unit on a sheave side, prevent this oil from adhering to a disc brake.

### <Entire Structure of Hoist>

Onto the base 130, the motor 110 is mounted and fixed.

A casing 111 of the motor 110 is formed of a first bracket B1, a second bracket B2, a frame F. The first bracket B1 includes a first bearing unit b1, and the second bracket B2 includes a second bearing unit b2.

A shaft S where a rotator 112 is provided is rotatably supported by the first bearing unit b1 and the second bearing unit b2. One end side (first bearing unit side) of the shaft S protrudes outside the first bearing unit b1. In the bearing units b1 and b2, lubricating oil is enclosed. By an oil seal (omitted in the drawing), oil leakage from the bearing units b1 and b2 is prevented.

On an inner peripheral surface of the frame F, a stator 113 is provided.

The sheave 120 is attached to a portion of the shaft S protruding outside the motor 110. The sheave 120 has a boss unit 121 on an inner peripheral side where the shaft S of the motor 110 fits, a cylindrical rope winding part 122 concentrically disposed on an outer peripheral side with respect to the boss unit 121, a spoke unit (coupling unit) 123 coupling the outer peripheral surface of the boss unit 121 and the inner peripheral surface of the rope winding part 122 together to attach the rope winding part 122 to the boss unit 121, and a brake disc D integrally formed at a portion of the rope winding part 122 on a motor side. That is, the sheave 120 is a brake-disc-equipped sheave having the brake disc D integrally formed therewith.

The outer peripheral surface of the rope winding part 122 is a rope winding surface 122a where a rope is wound or rewound.

In the sheave 120, a bearing unit insertion part 124 is formed on an inner peripheral side of the rope winding part 122. The bearing unit insertion part 124 is a cylindrical cavity space extending from a motor side toward a sheave side in an axial direction, and the first bearing unit b1 is disposed in a state of being inserted into this bearing unit insertion part 124.

Therefore, the first bearing unit b1 is disposed at a position on the inner peripheral side of the rope winding part 122, thereby decreasing the dimension of the hoist 101 in the axial direction.

When the sheave 120 is rotated by the motor 110, the rope is wound or rewound onto the rope winding surface 122a, which is the outer peripheral surface of the rope winding part 122.

Note that a brake main body unit including an electromagnetic clamper, a brake pad, and so forth is fixed and installed to the motor 110.

As described above, the oil seal to prevent oil leakage is attached to the bearing units b1 and b2. In the present embodiment, the first to third oil guide structures are provided so that even if lubricating oil leaks out from the first bearing unit b1 due to deterioration with time, damages, or the like of the oil seal, the leaked oil is prevented from reaching the brake disc D.

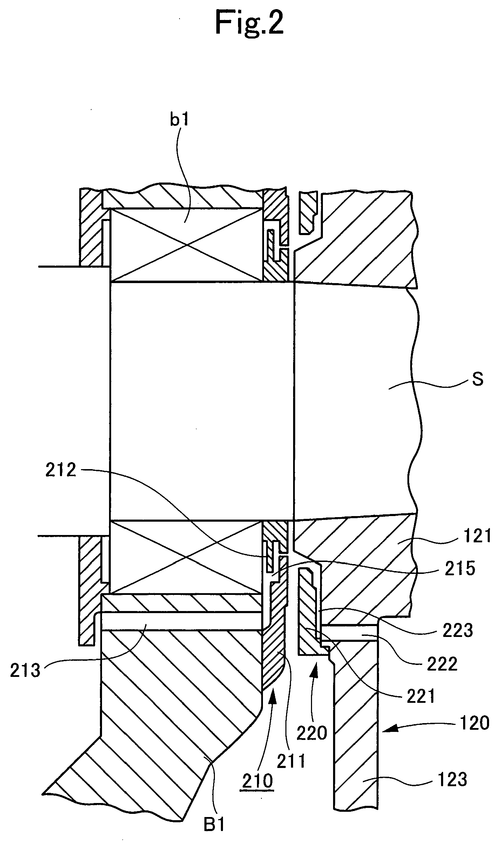

With reference to Figure 1 and Figure 2, which is an enlarged view of main portions, each oil guide structure is described below.

### <First Oil Guide Structure>

The first oil guide structure 210 is configured of a first guide seal 211, a flinger 212, a first oil drainage hole 213, a drain hole 214 and a first oil reservoir space 215.

The first guide seal 211 is an annular-plate-shaped member disposed so as to be in a concentric state with respect to the shaft S. A portion on an outer peripheral side of the first guide seal 211 is fixed to a surface of the first bracket B1 on a sheave side. A portion on an inner peripheral side of the first guide seal 211 is thin with respect to the portion on the outer peripheral side, and forms, together with the first bearing unit b1, a gap therebetween, which serves as the first oil reservoir space 215.

The flinger 212 is attached to the shaft S, and rotates with the shaft S. The flinger 212 is disposed at a position, regarding a radial direction, on the inner peripheral side of the first guide seal 211 and a position, regarding an axial direction, corresponding to (facing) a position where the first oil reservoir space 215 is formed.

The first oil drainage hole 213 is formed in the first bracket B1, makes inner spaces of the first oil reservoir space 215 and the motor 110 (casing 111) communicate with each other, and drains oil accumulated in the first oil reservoir space 215 into an inner space of the motor 110 (casing 111).

The drain hole 214 is formed at a position of the frame F on a lower end face, and makes the inner space and the outer surface of the motor 110 (casing 111) communicate with each other.

Note that in the first oil guide structure 210, a structure with the flinger 212 omitted therefrom can also be adopted.

Furthermore, in the first oil guide structure 210, a structure can also be adopted in which the flinger 212 is omitted and a felt is disposed at the position of the flinger 212. The felt absorbs leaked oil, is fixed to the guide seal 211 in a state of rounding along a circumferential direction, and is disposed in a state of being in contact with an outer peripheral surface of the shaft S.

### <Second Oil Guide Structure>

The second oil guide structure 220 is configured of a second guide seal 221, a second oil drainage hole 222, a second oil reservoir space 223.

The second guide seal 221 is an annular-plate-shaped member disposed so as to be in a concentric state with respect to the shaft S. A portion on an outer peripheral side of the second guide seal 221 is fixed to a surface of the spoke unit (coupling unit) 123 on a motor side. A portion on an inner peripheral side of the second guide seal 221 is thin with respect to the portion on the outer peripheral side, and forms, together with the boss unit 121, a gap therebetween, which serves as the second oil reservoir space 223.

The second oil drainage hole 222 is formed in a state of penetrating through the spoke unit (coupling unit) 123 in the axial direction, and drains oil accumulated in the second oil reservoir space 223 onto a surface of the spoke unit (coupling unit) 123 on a counter-motor side.

### <Third Oil Guide Structure>

The third oil guide structure 230 includes an oil guide surface 231. This oil guide surface 231 is a surface of the outer peripheral surface of the casing F from a portion where the first bearing unit b1 is provided to a lower-end face of the frame. This oil guide surface 231 forms a gently-descending slope allowing the oil leaked out from the first bearing unit b1 to flow down without dripping.

That is, the oil guide surface 231 of the third oil guide structure 230 is formed by connecting a vertical surface, a tilted surface tilted with respect to the vertical direction, and a curved surface together, and has neither a horizontal surface nor an angle at a corner portion of 90 degrees.

Note that the oil guide surface 231 of the third oil guide structure 230 may be a surface formed by connecting the vertical surface and the tilted surface tilted with respect to the vertical direction together.

Also, the oil guide surface 231 of the third oil guide structure 230 may be a surface formed by connecting the vertical surface and the curved surface together.

### <Flow Route of Leaked Oil>

When lubricating oil leaks out from the first bearing unit b1 on the sheave side due to deterioration with time, damages, or the like of the oil seal and, as will be described further below, the leaked oil flows as being guided by the above-described three oil guide structures 210, 220, and 230 without reaching the surface of the brake disc D.

First, an oil flow route in the first oil guide structure 210 is described.

When lubricating oil leaks out from the first bearing unit b1 on the sheave side, part of the oil flows downward on an end face of the first bearing unit b1 and the surface of the bracket B1, and is accumulated in the first oil reservoir space 215. Also, while the remaining oil flows toward the axial direction, the remaining oil drips along a left side surface (a surface on a first bearing unit b1 side) of the flinger 212 when the flinger 212 is not rotating. When the flinger 212 is rotating, and the remaining oil is flung away by centrifugal force to an outer peripheral side to be accumulated in the first oil reservoir space 215. Note that the motor 110 of the hoist 101 and, in turn, the flinger 212, are not always rotating but rotate only at the time of rope winding and rewinding, and therefore the flinger 212 may be in a state of not rotating.

The oil accumulated in the first oil reservoir space 215 flows through the first oil drainage hole 213 into the casing 111 for exit. The oil entering the casing 111 flows downward along an inner surface of the casing 111, and is discharged outside via the drain hole 214 formed at a position of the frame F on a lower end face.

The oil flowing as being guided by the first oil guide structure 210 in this manner flows to a position set apart from the brake disk D, and does not reach the brake disc D.

Next, an oil flow route in the second oil guide structure 220 is described.

A subtle gap is present between the first guide seal 211 and the flinger 212 in the first oil guide structure 210. Therefore, oil may flow out, although only slightly, through this gap toward a sheave side in the axial direction.

Thus leaked oil flows along the surface of the boss unit 121 on a motor side, and is accumulated in the second oil reservoir space 223.

The oil accumulated in the second oil reservoir space 223 passes through the second oil drainage hole 222 and flows to the spoke unit (coupling unit) 123 on a counter motor side (counter brake disc side) for exit.

In this manner, the oil flowing as being guided by the second oil guide structure 220 flows to a position on the counter brake disc side set apart from the brake disc D, and does not reach the brake disc D.

Next, an oil flow route in the third oil guide structure 230 is described.

A subtle gap is present between the first guide seal 211 and the flinger 212 in the first oil guide structure 210. Therefore, oil may flow out, although only slightly, through this gap downward along a surface of the first guide seal 211 on the sheave side.

Thus leaked oil flows down along the surface of the first guide seal 211 on the sheave side and the oil guide surface 231 of the third oil guide structure 230. Since the oil guide surface 231 forms a gently-descending slope, the oil flows down without dripping, and therefore this oil does not drip down to adhere to the brake disc D.

In the hoist 101, the brake disc D is integrally formed at the portion of the rope winding part 122 on the motor side. As described above, the oil leaking out from the first bearing unit b1 can be guided by the first to third oil guide structures 210, 220, and 230 to a position set apart from the brake disc D to flow.

As a result, the leaked oil is prevented from reaching and adhering to the brake disc D, and braking of the brake can be ensured.

### Reference Signs List

101 ... hoist, 110 ... motor, 111 ... casing, 112 ... rotator, 113 ... stator, 120 ... sheave, 121 ... boss unit, 122 ... rope winding part, 123 ... spoke unit, 124 ... bearing unit insertion part, 130 ... base, 210 ... oil guide structure, 211 ... first guide seal, 212 ... flinger, 213 ... first oil drainage hole, 214 ... drain hole, 215 ... first oil reservoir space, 220 ... oil guide structure, 221 ... second guide seal, 222 ... second oil drainage hole, 223 ... second oil reservoir space, 230 ... oil guide structure, 231 ... oil guide surface, B1, B2 ... bracket, b1, b2 ... bearing unit, F ... frame, S ... shaft, D ... brake disc

## Claims

1. An elevator hoist having a motor and a sheave to be rotated by the motor,
in the motor, one end side of a shaft rotatably supported by a first bearing unit and a second bearing unit protruding outside the first bearing unit,
the sheave having a boss unit which fits in a portion of the shaft protruding outside, a rope winding part concentrically disposed to the boss unit on an outer peripheral side, a coupling unit which couples the boss unit and the rope winding part together, a bearing unit insertion part which is a cavity space on an inner peripheral side of the rope winding part and extending from the motor side to the sheave side in an axial direction, and a brake disc integrally formed at a portion of the rope winding part on the motor side, and
the first bearing unit being disposed in a state of being inserted into the bearing unit insertion part, wherein
the elevator hoist comprising a first oil guide structure formed of
an annular-plate-shaped first guide seal disposed so as to be in a concentric state with respect to the shaft and having a portion on an outer peripheral side fixed to a surface of a first bracket including the first bearing unit on the sheave side and a portion on an inner peripheral side forming, together with the first bearing unit, a gap serving as a first oil reservoir space therebetween, and
a first oil drainage hole which drains oil accumulated in the first oil reservoir space to an inner space side of the motor.

2. The elevator hoist according to claim 1, wherein
the first oil guide structure further includes
a flinger attached to the shaft at a position of the first guide seal on the inner peripheral side and in a state of facing the first oil reservoir space.

3. The elevator hoist according to claim 1, further comprising
a second oil guide structure formed of
an annular-plate-shaped second guide seal disposed so as to be in a concentric state with respect to the shaft and having a portion on an outer peripheral side fixed to a surface of the coupling unit on the motor side and a portion on an inner peripheral side forming, together with the boss unit, a gap serving as a second oil reservoir space therebetween, and
a second oil drainage hole which drains oil accumulated in the second oil reservoir space to a surface of the coupling unit on a counter motor side.

4. The elevator hoist according to any one of claims 1 to 3, further comprising
a third oil guide structure including an oil guide surface in which a surface from a portion of an outer peripheral surface of a casing of the motor where the first bearing unit is provided to a lower end face of the casing forms a gently-descending slope.

5. The elevator hoist according to any one of claims 1 to 3, further comprising
a third oil guide structure in which a surface from a portion of an outer peripheral surface of a casing of the motor where the first bearing unit is provided to a lower end face of the casing forms an oil guide surface formed by connecting a vertical surface, a tilted surface tilted with respect to a vertical direction, and a curved surface together,
a third oil guide structure in which the surface from the portion of the outer peripheral surface of the casing of the motor where the first bearing unit is provided to the lower end face of the casing forms an oil guide surface formed by connecting the vertical surface and the tilted surface tilted with respect to the vertical direction together, or
a third oil guide structure in which the surface from the portion of the outer peripheral surface of the casing of the motor where the first bearing unit is provided to the lower end face of the casing forms an oil guide surface formed by connecting the vertical surface and the curved surface together.
